# EUROPEAN PATENT APPLICATION

(11) **EP 3 301 122 A1**
(43) Date of publication of application: **04.04.2018**
(21) Application number: 16191725.7
(22) Date of filing: 30.09.2016
(51) Int. Cl.: C08G 65/40, B32B 1/08, F16L 11/08, F16L 11/22

(54) **FLEXIBLE HOSES COMPRISING OR CONSISTING OF ALIPHATIC POLYKETONE**

(71) Applicant: A. Schulman GmbH, 50170 Kerpen (DE)
(72) Inventor: Dowe, Andreas, 46539 Dinslaken (DE)
(74) Representative: dompatent von Kreisler Selting Werner - Partnerschaft von Patent- und Rechtsanwälten mbB

(57) **Abstract**

Flexible hoses comprising or consisting of aliphatic polyketone, umbilicals as well as uses of the flexible hoses.

## Description

Any of the documents mentioned in the description are incorporated by reference in their entirety.

The present invention relates to flexible hoses comprising or consisting of aliphatic polyketone, umbilicals comprising the hoses and uses thereof.

### Prior art:

Flexible hoses as a functional element in an umbilical for use in the offshore production of hydrocarbons are known.

In deep water subsea oil field operations, umbilicals are used to transport power, signals, media or data to and from a subsea installation. An umbilical combines a group of one or more types of functional elements such as optical fibre cables, electrical cables, or hoses for media transportation. Such media could be gas, water, glycol, water/glycol mixtures, methanol, ethanol or other chemical products. Typical functions of hoses are injection of media into the well, like methanol, and the control of valves. Hoses for injection of media are also named injection lines. In hoses controlling valves and other equipment, the media is generally not conveyed but remains steady in the hose and, for example, is used to transport an impulse triggered at the platform to a valve installed at the seabed. Such impulse, for example, could close a safety valve. The media in such, so called control lines, are typically water/glycol mixtures.

The functional elements are assembled together, for example, in a helical manner. An extruded thermoplastic layer applied by an extrusion process could surround this assembly. Furthermore, the assembly could have a reinforcement layer helically wound along the assembly placed on the interior of the surrounding thermoplastic layer as a mechanical protection of the inner functional elements. These reinforcement layers could for example consist of steel wires or steel strips. US 4,309,869 describes a typical umbilical assembly.

Ideally, an umbilical contains as many functional elements as required for a particular application.

Typically, the hoses used in umbilicals are either thermoplastic, flexible hoses or steel tubes. The advantage of steel tubes are greater collapse resistance, higher response time and no diffusion of media through the wall of the steel tube. Nevertheless, the high stiffness of steel is a disadvantage, for example, during assembling in the umbilical. WO 2004/046598 describes a solution applying a corrugated steel tube to enhance flexibility.

The advantage of thermoplastic, flexible hoses is that they don't suffer from corrosion and have greater flexibility allowing an optimized assemby of the umbilical. This allows maximizing the number of functional components to be assembled in an umbilical.

The disadvantage of thermoplastic, flexible hoses is that they are permeable to media and this creates problems when the hose is in use for fluid or for gas lift applications. This could even lead to safety problems during the transportation of methane or alcohols for example.

In general, a thermoplastic, flexible hose consists of an interior thermoplastic lining, as barrier to the escape of the conveyed or steady media and one or more reinforcement layers helically wound on the external side of the internal lining. An exterior sheath may moreover be present, extruded over the reinforcement layers. The decision on the thermoplastic material to be used for the interior lining depends on the intended function and operation conditions of the hose in the umbilical. In conventional hoses polyamides, such as PA11 or PA12, polyvinylidene fluoride (PVDF), or polyolefines are examples for used materials. In addition a thermoplastic hose designed as injection line can comprise an additional reinforcement layer on the internal side of the interior lining, in order to prevent collapse of the thermoplastic hose under high external pressure.This type of interior reinforcement is usually termed a carcass. Aramid fibres, polyester fibres, steel fibres, or steel mesh are typical materials used as reinforcement layers. The exterior sheath may be made of polyolefines, polyamides, such as PA11 or PA12, or thermoplastic polyesters (TPE).

A further disadvantage of thermoplastic, flexible hoses is the potential extraction of substances of the thermoplastic material of the interior lining into the conveyed or steady media. The extracted substances, for example oligomers of the used polymer could negatively influence the conveyed media. In the case of a control line, where the media normally remains more or less steady in the hose, such oligomers could agglomerate in the bore of the thermoplastic hose. This could be a safety problem, particularly if these agglomerates accumulate at a safety valve resulting in a blockage of the valve. A special oligomer-free PA11 has been developed and introduced to the market in the past. Some operators of subsea oil fields have specified the sole use of this PA11 material for interior lining of such control lines, also named clean lines, to emphasize that no substances do agglomerate in the bore. Other operators have specified the use of said PA11 for all polyamide interior linings regardless of the final function of the hose in the umbilical. Nevertheless, said PA11 solution has the disadvantage of single sourcing, bearing a high risk on the supply chain. In general, PVDF does also fulfill the requirements on clean lines but has the disadvantage of high costs.

Similar art is for example described in WO 99/67560 or WO 02/090818.

### Object of the invention:

It was therefore an object of the present invention to overcome the drawbacks of the prior art and provide flexible hoses that are suitable for the ever increasing demands in this field of endeavour as. The hoses according to the present invention should be able to be used over a broad range of operation conditions while at the same time only have moderate cost and allow to reduce the number of required materials in flexible hoses significantly. The hoses of the invention should specifcally overcome the drawbacks of the prior art in that they solve the above-discussed disadvantages of permeability and potential extraction of substances. A further object of this invention was to provide improved umbilicals. An additional object of the present invention was to provide several uses for the hoses and umbilicals according to the present invention.

### Solution:

The object of the present invention has been solved by flexible hoses comprising or consisting of an aliphatic polyketone.

Additionally, the object of the present invention has been solved by an umbilical in which the hose of the present invention is used.

Further, several uses for the hoses and the umbilicals according to the present invention have been found, thus solving that aspect of the present invention's object.

### Definition of terms:

Temperature values are, if not specified otherwise, in degrees celcius (°C).

If not specified otherwise, the processes and reactions or process steps are conducted at normal pressure/atmospheric pressure that means at about 1013 mbar.

In the context of the present invention the formulation "and/or" includes any one as well as all combinations of the elements given in the respective list.

In the context of the present invention the formulation "embodiment of the present invention" is intechangeably used with the formulation "variation of the present invention".

In the context of the present invention the formulation "comprise or consist of", as well as its various grammatical forms, means that the respective preceedeing matter comprises the following matter and that its is preferred that the preceeding matter is composed of the following matter.

### Detailed description:

A first embodiment of the present invention is a flexible hose comprising or consisting of an aliphatic polyketone.

The aliphatic polyketone has only carbon atomes in its backbone and comprises and consists of the structural units

(I) [-CH₂CHR₁(C=O)-]

and

(II) [-CH₂CHR₂(C=O)-],

wherein R₁ and R₂ are independently from one another the same or different and are selected from the group consisting of hydrogen and C₁ to C₁₂-alkyl preferably being selected from the group consisting of methyl, ethyl, propyl, butyl, pentyl, hexyl or heptyl, especially preferred R₁ is hydrogen and R₂ is methyl, wherein the structural units are randomly distributed, blocked or both.

In one variation of the present invention the aliphatic polyketone is semicrystalline.

In one embodiment of the present invention the polyketone polymer comprises at least 80% by volume, preferably at least 90 % by volume, especially preferred at least 95% by volume of the structural units (I) and (II).

In one embodiment of the present invention the aliphatic polyketone has a melting temperature of between 200°C and 250°C, preferably 210°C to 240°C. In one embodiment of the present invention the aliphatic polyketone has a molecular weight of at least 40000 g/mol, preferably of at least 60000 g/mol.

In one additional embodiment of the present invention the polyketone has a molecular weight of at least 200000 g/mol.

In one embodiment of the present invention the polyketone has a weight-average molecular weight of from 140000 g/mol to 410000 g/mol, even more preferably a weight-average molecular weight of from 150000 g/mol to 210000 g/mol or from 290000 g/mol to 400000 g/mol and especially preferably a weight-average molecular weight of from 160000 g/mol to 200000 g/mol or from 300000 g/mol to 390000 g/mol.

Examples for commercially available polyketones in this context are available under the designation Hyosung Polyketon M330A, M340A, M630A and M640A all produced by Hyosung.

In the context of the present invention it has surprisingly been found that a flexible hose comprising or consisting of the above-described aliphatic polyketone has a variety of beneficial features that make it especially well suitable for use in e.g. umbilicals.

The flexible hoses of the present invention comprising or consisting of the aliphatic polyketone according to the present invention have increased lifetimes in comparison with those of the prior art.

Further, it has been found that hose comprising or consisting of aliphatic polyketone (PK) shows no extraction combined with agglomeration of substances, like oligomers, and shows a significant lower permeation of media in comparison to polyamides such as PA11 and PA12.

In one embodiment of the present invention, the hose has an interior lining comprising or consisting of aliphatic polyketone.

In one embodiment of the present invention, the hose can be extruded by known extrusion technologies.

In one embodiment of the present invention the interior lining of the flexible hose has a wall thickness of between 0.6 mm and 4.00 mm. In another embodiment of the present invention the interior lining of the flexible hose has a wall thickness of between 1.0 mm and 2.00 mm.

Of course, it should be understood that the above-mentioned thicknesses of the interior lining of flexible hose according to the present invention are only examplary and encompass the thicknesses usually employed for such linings. It is within the context of the present invention to provide thicknesses that are considerably smaller or greater than those mentioned above.

In one embodiment of the present invention the hose is manufactured in one part, the part having the desired length.

In one embodiment of the present invention the interior linig is extruded in one part, the part having the desired length.

In one embodiment of the present invention the length of the hose or interior lining can be extended by welding elements of shorter length together. Suitable welding processes are well known, examples of such processes are hot plate welding and laser welding.

In one preferred embodiment of the present invention, the hose is not welded together from shorter parts but manufactured as a single part with a length of 1000 meters or more.

In one embodiment of the present invention the welding process can be applied at the manufacturing side of the hose producer, in another embodiment of the present invention the welding process can be applied at the manufacturing side of the manufacturer of the umbilical.

In one embodiment of the present invention it is possible to add further additives or other components to the polyketone. In one embodiment of the present invention this can be done by a compounding step prior to the extrusion; in another embodiment of the present invention this can be done by a compounding step during the extrusion.

Additives that could be added to the polyketone in an amount of up to 5% by weight, based on the polyketone, according to one embodiment of the present invention are selected from the group consisting of heat and/or UV stabilizers, pigments, lubricants, carbon black, or other typcial substances.

In one embodiment of the present invention other components that could be added to the polyketone are selected from the group consisting of other polymers, impact modifiers, fillers like minerals or glass spheres, and plasticizers.

In one embodiment of the present invention in which additives and/or other components have been added to the polyketone the matrix of the compounded product remains polyketone, in other words the polyketone content is at least 50 percent by weight based on the compounded product.

Fibres added may increase the surface roughness of the resulting flexible hose which may result in undesirable pressure loss in the hose.

Accordingly, in one embodiment of the present invention no fibres are added to the aliphatic polyketone, though the other mentioned additives may still be added.

In addition, in one embodiment of the present invention, the added additives or components shall not influence the media conveyed through the flexible hose nor shall be extractable or at least shall not build up agglomerates once extracted.

Suitable plasticizers than can be added to the aliphatic polyketone in one embodiment of the present invention are for example disclosed in US 6,384,115.

In one embodiment of the present invention, the flexible hose comprises or consists of
1 an internal carcass, surounded by
2 an aliphatic polyketone lining, followed by
3 at least one reinforcement layer, followed by
4 an external sheath of a polyolefin, TPU, or polyamide.

In one embodiment of the present invention, the hose is designed for a control line and can, in a variant, be produced without an internal carcass.

In one embodiment of the present invention, the hose is designed as a hydraulic line with the hydraulic media preferably being selected from the group consisting of water, glycol, methanol, ethanol and mixtures thereof, espcially water/glycol.

The apliphatic polyketone products take up (incorporate) less of the mentioned hydraulic media and show considerable less swelling than other polymers, like for exaple polyamides, when contacted with the mentioned hydraulic media.

In a further embodiment of the present invention the hose is designed as an injection line comprising or consisting of the aliphatic polyketone and at least one internal carcass. These injection lines are to be used when needed and can be used to convey specific media such as processing aids, and the injection line may be allowed to empty if not in use.

A further embodiment of the present invention is an umbilical, preferably for subsea or deep-sea applications, in particular for media transportation, comprising or consisting of the flexible hose of the present invention.

In one embodiment of the present invention the carcass is an interlocked metallic construction that is to prevent, totally or partially, collapse of the pipe due to pipe decompression, external pressure, tensile armour pressure, and mechanical crushing loads.

In one embodiment of the present invention the internal collapse resistent layer is a carcass and comprises or consists of stainless steel, preferably stainless 316L.

In one embodiment of the present invention the reinforcement layer is made of fibres helically wound around the lining. In one embodiment the reinforcement layer comprises or consists of metall wires or meshes, particularely of steel, polyethylene fibres, polyester fibres or aramide fibres.

In one embodiment of the present invention the external sheath layer comprises or consists of a polyolefin, preferably HDPE, a polyamide and/or TPU.

In one embodiment of the present invention the external sheath layer also comprises or consists of an alipahtic polyketone as described above.

It has been found in the present invention that an interior lining of a hose or a hose comprising or consisting an aliphatic polyketone as described above is particularly well suitable for transporting media, the media being selected from the group consisting of water, glycol, water/glycol mixtures, methanol, ethanol, other chemical products and mixtures thereof, preferably selected from the group consisting of water, glycol, water/glycol mixtures, methanol, ethanol and mixtures thereof and, accordingly, in one embodiment of the present invention can be used for transporting these media.

In one embodiment of the present invention a use of an aliphatic polyketone, which is preferably semi-crystalline, and in particular as described above, as an interior lining for flexible hoses, especially for umbilicals, has been found.

In one embodiment of the present invention the umbilical of the present invention is used for subsea or deep-sea applications.

In one embodiment of the present invention the use of the flexible hose as described above in an umbilical for offshore and/or subsea operations, preferably in subsea production umbilicals has been found.

In one embodiment of the present invention the use of the flexible hose as described above as a hose for media transportation, preferably for sub-sea or deep-sea applications, the media being preferably selected from the group consisting of water, glycol, water/glycol mixtures, methanol, ethanol, other chemical products and mixtures thereof, more preferably selected from the group consisting of water, glycol, water/glycol mixtures, methanol, ethanol and mixtures thereof, especially in an umbilical has been found. The apliphatic polyketone products take up (incorporate) less of the mentioned media and show considerable less swelling than other polymers, like for exaple polyamides, when contacted with the mentioned media.

In one embodiment of the present invention the use of the flexible hose as described above as a control line, preferably for sub-sea or deep-sea applications, particularly for controlling valves, the hydraulic fluid preferably comprising water and a glycol, especially in an umbilical has been found. The apliphatic polyketone products take up (incorporate) less of the mentioned media and show considerable less swelling than other polymers, like for exaple polyamides, when contacted with the mentioned media.

In one embodiment of the present invention the use of the flexible hose as described above for transporting and/or containing hydraulic fluids, preferably those comprising water and a glycol, preferably for sub-sea or deep-sea applications has been found.

In one embodiment of the present invention the use of an umbilical, preferably for sub-sea or deep-sea applications, especially preferably a sub-sea production umbilical, characterized in that it comprises a flexible hose as described above has been found.

In one embodiment of the present invention, the hoses are not unbonded pipes nor are part of unbonded pipes, are not unbonded flexible pipes, are not unbonded pipes according to WO 99/67560 or WO 02/090818 and not unbonded pipes as described in ISO 13628-2.

The various variations and/or embodiments of the present invention, for example but not exclusively those of the different dependent claims or those described throughout the specification, can be combined in any desired way.

The invention will now be described with reference to the following nonlimiting example.

### Example

The following table shows a comparison of the permeation coefficients for methan and methanol of a hose according to the present invention comprising the Hyosung Polyketon 630A with a hose made of Rilsan BESNO P40 TL, a plastiziced PA11 produced by Arkema, commonly used as interior lining of injection hoses.

Hoses with 10 mm outer diameter and 1 mm wall thickness have been extruded from each material. 2 m samples were taken, filled with methanol, closed and stored for 240 h at 60°C. After cooling to room temperature the fluid was drained into a glass bottle. The glass bottle was closed. For one week the fluid was visually inspected on agglomerates developed by extracted substances every day. The result is shown in the table.

| | **Unit** | **PK** | **PA11** |
|---|---|---|---|
| Permeation coefficient of methanol at 40°C | g*mm/m²*d | 6 | 115 |
| Permeation coefficient of methane at 80°C | 10⁻⁸ cm³*cm/cm²*s*bar | 0,5 | 1,5 |
| Agglomerates visible after extraction at 60°C with methanol | | no | yes |

This comparison shows the clear advantage of the present invention's hoses in terms of permeation rates as well as on the exclusion of extractables that form agglomerates.

## Claims

1. A flexible hose, preferably for sub-sea or deep-sea applications, comprising an interior lining comprising or consisting of an aliphatic polyketone with only carbon atoms in its backbone and comprising or consisting of the structural units
(I) [-CH₂CHR₁(C=O)-],
and
(II) [-CH₂CHR₂(C=O)-],
wherein R₁ and R₂ are independently from one another the same or different and selected from the group consisting of hydrogen and C₁ to C₁₂-alkyl, the C₁ to C₁₂-akyl preferably being selected from the group consisting of methyl, ethyl, propyl, butyl, pentyl, hexyl or heptyl, especially preferred R₁ is hydrogen and R₂ is methyl, wherein the structural units are randomly distributed, blocked or both.

2. The flexible hose according to claim 1, wherein the polyketone polymer comprises at least 80% by volume, preferably at least 90% by volume, especially preferred at least 95% by volume, of the structural units (I) and (II).

3. The flexible hose according to claim 1 or 2, wherein the polyketone polymer has a melting temperature of between 200°C and 250°C, preferably 210°C to 240°C, and a molecular weight of at least 40000 g/mol, , preferably of at least 60000 g/mol, more preferably a weight-average molecular weight of from 140000 g/mol to 410000 g/mol, even more preferably a weight-average molecular weight of from 150000 g/mol to 210000 g/mol or from 290000 g/mol to 400000 g/mol and especially preferably a weight-average molecular weight of from 160000 g/mol to 200000 g/mol or from 300000 g/mol to 390000 g/mol.

4. The flexible hose according to any one of claims 1 to 3, **characterized in that** the interior lining has a wall thickness of between 0.6 mm and 4.00 mm, preferably between 1.0 mm and 2.00 mm.

5. The flexible hose according to any one of claims 1 to 4 further comprising one or more, preferably all of the following layers
- optionally an internal stabilization layer on the inside of the interior lining, the interior lining preferably being extruded onto the internal stabilization layer,
- at least one reinforcement layer, preferably being helically wound, on the outside of the interior polyketone lining and consisting of one or more sub-layers, especially made of aramide fibers,
- an outer thermoplastic layer extruded on the reinforcement layer, preferabyl made of a polyolefin, TPU, polyamide or a blend of those.

6. The flexible hose according to claim 5, **characterized in that** it does not comprise any other layers.

7. Use of the flexible hose according to any one of claims 1 to 6 in an umbilical for offshore and/or subsea operations, preferably in subsea production umbilicals.

8. Use of the flexible hose according to any one of claims 1 to 6, as a hose for media transportation, preferably for sub-sea or deep-sea applications, the media being preferably selected from the group consisting of water, glycol, water/glycol mixtures, methanol, ethanol, other chemical products and mixtures thereof, more preferably selected from the group consisting of water, glycol, water/glycol mixtures, methanol, ethanol and mixtures thereof, especially in an umbilical.

9. Use of the flexible hose according to any one of claims 1 to 6, as a control line, preferably for sub-sea or deep-sea applications, particularly for controlling valves, the hydraulic fluid preferably comprising water and a glycol, especially in an umbilical.

10. Use of the flexible hose according to any one of claims 1 to 6 for transporting and/or containing hydraulic fluids, preferably those comprising water and a glycol, preferably for sub-sea or deep-sea applications.

11. An umbilical, preferably for sub-sea or deep-sea applications, especially preferably a sub-sea production umbilical, **characterized in that** it comprises a flexible hose according to any one of claims 1 to 6.
